(19)

Europäisches
Patentamt
European
Patent Office
Office européen
des brevets

(11) **EP 3 904 403 A1**

(12) **EUROPEAN PATENT APPLICATION**
published in accordance with Art. 153(4) EPC

(43) Date of publication:
**03.11.2021 Bulletin 2021/44**

(21) Application number: **19904355.5**

(22) Date of filing: **10.12.2019**

(51) Int Cl.:
**C08F 36/18** (2006.01)          **C08F 2/26** (2006.01)

(86) International application number:
**PCT/JP2019/048316**

(87) International publication number:
**WO 2020/137525 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2018 JP 2018245756**

(71) Applicant: **Showa Denko K.K.
Tokyo 105-8518 (JP)**

(72) Inventors:
• **OGAWA, Noriko
Tokyo 105-8518 (JP)**
• **KAMIJO, Masanao
Tokyo 105-8518 (JP)**

(74) Representative: **Strehl Schübel-Hopf & Partner
Maximilianstrasse 54
80538 München (DE)**

(54) **METHOD FOR PRODUCING CHLOROPRENE POLYMER LATEX**

(57)    The present invention relates to a method for producing a chloroprene polymer latex, comprising: adding (B) a sodium salt of a naphthalene sulfonate formaldehyde condensate and (C) sodium dodecylbenzenesulfonate to a monomer solution that contains (A-1) 2-chloro-1,3-butadiene (chloroprene) or a monomer solution that contains (A-1) 2-chloro-1,3-butadiene (chloroprene) and (A-2-1) 2,3-dichloro-1,3-butadiene, and performing polymerization. Consequently, the present invention enables the production of a chloroprene polymer latex which is suppressed in aggregates that are generated during the production of a chloroprene polymer latex having a high solid content.

EP 3 904 403 A1

**Description**

TECHNICAL FIELD

The present invention relates to a chloroprene polymer latex and a method for producing the same. In further detail, the present invention relates to a chloroprene polymer latex that is suppressed in aggregates generated during the production by using a combination of new dispersants, and a method for producing the same. The chloroprene polymer latex obtained by the method according to the present invention is suitably used in dip-molded products such as gloves, bladders of blood pressure gauges, and rubber threads, as well as in asphalt modifiers, adhesives, pressure-sensitive adhesives, and waterproofing agents, and is particularly suitably in medical gloves.

Background Art

Conventionally, chloroprene polymer latexes have been broadly used for example in dip-molding applications such as gloves, pressure-sensitive adhesive / adhesive applications, and civil engineering and construction applications such as elastic asphalt (modified asphalt), and elastic cement, due to their good properties such as general rubber physical properties, weatherability, heat resistance, and chemical resistance. However, aggregates generated during polymerization have been problematic particularly from the viewpoint of productivity of dip-molded products.

As a technique related to the present invention, JP H11-502889 A (Patent Literature 1) discloses a chloroprene latex polymer composition particularly for adhesives, prepared by emulsion polymerization. Patent Literature 1, however, neither describes nor suggests the generation of aggregates.

Citation List

Patent Literature

Patent Literature 1: JP H11-502889 A (US 5773544 A)

SUMMARY OF INVENTION

TECHNICAL PROBLEM

The object of the present invention is providing a method for producing a chloroprene polymer latex, in which the generation of aggregates is suppressed during the production of a chloroprene polymer latex having a high solid content, which is preferred from the viewpoints of productivity, usability, and transportation.

SOLUTION TO PROBLEM

As a result of earnest studies to achieve the above object, the present inventors have found that by simultaneously using specific 2 types of emulsifiers, the generation of aggregates can be suppressed even for the production of a chloroprene polymer latex having a high solid concentration, thereby completing the present invention.

Namely, the present invention relates to a method for producing a chloroprene polymer latex as described in [1] to [6] below.

[1] A method for producing a chloroprene polymer latex, comprising: adding (B) a sodium salt of a naphthalene sulfonate formaldehyde condensate and (C) sodium dodecylbenzenesulfonate to a monomer solution that contains (A-1) 2-chloro-1,3-butadiene (chloroprene) or a monomer solution that contains (A-1) 2-chloro-1,3-butadiene (chloroprene) and (A-2-1) 2,3-dichloro-1,3-butadiene, and performing emulsion polymerization.

[2] The method for producing a chloroprene polymer latex described in [1], wherein the addition amount of the (B) sodium salt of a naphthalene sulfonate formaldehyde condensate is 0.3 parts by mass or higher and 2.0 parts by mass or lower relative to the feed amount of all the monomers of 100 parts by mass.

[3] The method for producing a chloroprene polymer latex described in [1] or [2], wherein the addition amount of (C) sodium dodecylbenzenesulfonate is 0.01 parts by mass or higher and 0.2 parts by mass or lower relative to the feed amount of all the monomers of 100 parts by mass.

[4] The method for producing a chloroprene polymer latex described in any one of [1] to [3], wherein an anionic surfactant is used as an emulsifier.

[5] The method for producing a chloroprene polymer latex described in any one of [1] to [4], wherein a rosin acid soap that is a rosin acid saponified with an excess amount of sodium hydroxide and/or potassium hydroxide is used as an emulsifier.

[6] The method for producing a chloroprene polymer latex according to any one of [1] to [5], wherein the monomer solution further contains (A-2-2) another monomer that is copolymerizable with (A-1) 2-chloro-1,3-butadiene (chloroprene).

ADVANTAGEOUS EFFECTS OF INVENTION

The present invention enables the production of a chloroprene polymer latex in which the generation of aggregates is suppressed even at a high solid concentration. Due to its high latex amount per volume, the chloroprene polymer latex according to the present invention enables the highly efficient production of dip-molded products such as gloves, bladders of blood pressure gauges, and rubber threads by a dip-molding method.

DESCRIPTION OF EMBODIMENTS

Embodiments of the present invention are described in detail below.

Chloroprene polymer latexes, which are produced by the production method according to the present invention, are polymer latexes comprising chloroprene as a main monomer component. The polymer latexes as such are specifically (1) a homopolymer latex of (A-1) 2-chloro-1,3-butadiene (chloroprene); (2) a copolymer latex of (A-1) chloroprene and (A-2-1) 2,3-dichloro-1,3-butadiene; (3) a copolymer latex of (A-1) chloroprene, (A-2-1) 2,3-dichloro-1,3-butadiene, and (A-2-2) another monomer; and (4) a copolymer latex of (A-1) chloroprene and (A-2-2) another monomer. In the present specification including the claims, the term "the chloroprene polymer latex" means the above polymer latexes (1) to (4).

[(A-2-1) 2,3-dichloro-1,3-butadiene]

According to the present invention, (A-2-1) 2,3-dichloro-1,3-butadiene is preferably contained as another monomer component forming the chloroprene polymer latex. During the copolymerization, the ratio of (A-1) chloroprene to (A-2-1) 2,3-dichloro-1,3-butadiene is, in % by mass, preferably 100.0 : 0.0 to 70.0 : 30.0, more preferably 100.0 : 0.0 to 75.0 : 25.0, and still more preferably 100.0 : 0.0 to 80.0 : 20.0. When the ratio is within the above range, polymer crystallization is suppressed, and good flexibility is obtained.

[(A-2-2) another copolymerizable monomer]

According to the present invention, (A-2-2) another copolymerizable monomer that may be contained in (A) a chloroprene polymer forming a chloroprene polymer latex is a monomer that is copolymerizable with (A-1) chloroprene and (A-2-1) 2,3-dichloro-1,3-butadiene above. Specific examples are 1-chloro-1,3-butadiene, butadiene, isoprene, styrene, acrylonitrile, acrylic acid and the esters thereof, and methacrylic acid and the esters thereof. The ratio of (A-1) chloroprene to the (A-2-2) copolymerizable monomer is, in % by mass, preferably 100.0 : 0.0 to 90.0 : 10.0, more preferably 100.0 : 0.0 to 92.0 : 8.0, and still more preferably 100.0 : 0.0 to 94.0 : 6.0.

[(B) a sodium salt of a naphthalene sulfonate formaldehyde condensate and (C) sodium dodecylbenzenesulfonate]

The process for producing the (A) chloroprene polymer according to the present invention is preferably performed via aqueous emulsion polymerization.

According to the present invention, (B) a sodium salt of a naphthalene sulfonate formaldehyde condensate and (C) sodium dodecylbenzenesulfonate as emulsifiers for the emulsion polymerization are added to a monomer solution containing (A-1) 2-chloro-1,3-butadiene (chloroprene) or a monomer solution containing (A-1) 2-chloro-1,3-butadiene (chloroprene) and (A-2-1) 2,3-dichloro-1,3-butadiene, and the polymerization is performed.

By adding (B) a sodium salt of a naphthalene sulfonate formaldehyde condensate and (C) sodium dodecylbenzenesulfonate, the generation of aggregates is suppressed even during the production of a chloroprene polymer latex having a high solid content, and good moldings are obtainable by a dip-molding method.

The addition amount of (B) a sodium salt of a naphthalene sulfonate formaldehyde condensate is preferably 0.3 parts by mass or higher and 2.0 parts by mass or lower, more preferably 0.4 parts by mass or higher and 1.2 parts by mass or lower, and still more preferably 0.5 parts by mass or higher and 0.8 parts by mass or lower relative to the total amount of (A-1) 2-chloro-1,3-butadiene (chloroprene), (A-2-1) 2,3-dichloro-1,3-butadiene, and (A-2-2) another monomer, namely the feed amount of all the monomers of 100 parts by mass. When the addition amount is within the above range, polymerization is performed without the generation of aggregates.

The addition amount of (C) sodium dodecylbenzenesulfonate is, relative to the feed amount of all the monomers of 100 parts by mass, 0.01 parts by mass or higher and 0.2 parts by mass or lower, preferably 0.02 parts by mass or higher and 0.15 parts by mass or lower, more preferably 0.03 parts by mass or higher and 0.13 parts by mass or lower, and still more preferably 0.04 parts by mass or higher and 0.12 parts by mass or lower.

When the addition amount is within the above range, bubbling is suppressed, and stable emulsion polymerization is performable.

[Rosin acid soap]

In addition to (B) a sodium salt of a naphthalene sulfonate formaldehyde condensate and (C) sodium dodecylbenzenesulfonate, a commonly used rosin acid soap is preferably used as an emulsifier for the emulsion polymerization. The addition amount of the rosin acid soap is preferably 1.5 parts by mass or higher and 4.0 parts by mass or lower, more preferably 1.6 parts by mass or higher and 3.7 parts by mass or lower, and still more preferably 1.7 parts by mass or higher and 3.0 parts by mass or lower, relative to the total amount of (A-1) 2-chloro-1,3-butadiene (chloroprene), (A-2-1) 2,3-dichloro-1,3-butadiene, and (A-2-2) another monomer, namely the feed amount of all the monomers of 100 parts by mass. When the addition amount is within the above range, a simple and convenient solidification operation is performable.

[Chloroprene polymer latex]

The latex of the (A) chloroprene polymer is specifically (1) a homopolymer latex of (A-1) chloroprene, (2) a copolymer latex of (A-1) chloroprene and (A-2-1) 2,3-dichloro-1,3-butadiene, (3) a copolymer latex of (A-1) chloroprene, (A-2-1) 2,3-dichloro-1,3-butadiene, and (A-2-2) another monomer, or (4) a copolymer latex of (A-1) chloroprene and (A-2-2) another monomer, as described above.

With respect to the chloroprene polymer latex according to the present invention, additives such as an emulsifier, a chain transfer agent, and a stabilizer may be used in addition to the above (A) chloroprene-based copolymers depending on necessity, as long as the object of the present invention is not lost.

The chain transfer agent is not particularly limited and a xanthogendisulfide or an alkyl mercaptan may be used. The use amount of the chain transfer agent cannot be defined unconditionally since it is affected by the type thereof, the use amount of (A-2-1) 2,3-dichloro-1,3-butadiene, polymerization rate and polymerization temperature. However, when n-dodecyl mercaptan is used for example, the amount is preferably 0.03 parts by mass or higher and 0.2 parts by mass or lower, more preferably 0.06 parts by mass or higher and 0.15 parts by mass or lower, and still more preferably 0.08 parts by mass or higher and 0.13 parts by mass or lower, relative to the feed amount of all the monomers of 100 parts by mass.

[Method for producing chloroprene polymer]

Polymerization initiator:
A polymerization initiator is not particularly limited, and a generic radical polymerization initiator may be used. Particularly for emulsion polymerization, organic or inorganic peroxides such as benzoyl peroxide, potassium persulfate, and ammonium persulfate, and azo compounds such as azobisisobutyronitrile are preferred. Promoters such as anthraquinone sulfonate, potassium sulfite, and sodium sulfite may be simultaneously used, if appropriate. Radical polymerization initiators and promoters may be used in combination of 2 or more thereof.

Polymerization temperature:
The polymerization temperature to obtain the chloroprene polymer latex is preferably 30 to 55 °C, more preferably 35 to 50 °C, and particularly preferably 35 to 45 °C. A polymerization temperature of 30 °C or lower is not preferred since the productivity of the (A) chloroprene copolymer may be reduced, the obtained latex may have insufficient adhesive strength, or a setting property may be deteriorated. If the polymerization temperature is higher than 55 °C, the vapor pressure of (A-1) 2-chloro-1,3-butadiene (chloroprene) is high, causing great difficulty in the polymerization operation, and moreover, the obtained polymer may have insufficient mechanical properties such as tensile strength.

Solid concentration of chloroprene polymer latex:
The chloroprene copolymer latex according to the present invention ordinarily has a solid concentration of preferably 50 to 65 % by mass, more preferably 52 to 60 % by mass, and still more preferably 54 to 60 % by mass. By making the solid concentration to be 50 % by mass or higher, a chloroprene polymer latex having a high concentration per unit volume is obtainable, and reduced drying time and load on a drying device can be achieved. In addition, appropriate fluidity is obtainable when the solid concentration is 65 % by mass or lower.

Polymerization terminator:
During the production of a chloroprene polymer latex, a polymerization terminator is ordinarily added to terminate the reaction when a predetermined polymerization rate is achieved, in order to obtain a polymer having an intended molecular weight and intended molecular weight distribution. The polymerization terminator is not particularly limited and commonly used ones such as phenothiazine, para-t-butylcatechol, hydroquinone, hydroquinone monomethyl ether, and diethyl hydroxyl amine may be used.

EXAMPLES

The present invention is described based on examples and comparative examples below, but is not limited thereto.

With respect to the chloroprene polymer latexes in the examples and comparative examples, polymerization conversion, solid content after polymerization, and incidence of aggregates were obtained by the following methods.

Solid content after polymerization and polymerization conversion:

A predetermined amount of an emulsion after polymerization was collected and the polymerization conversion was calculated from the solids after drying performed at a temperature of 141 °C for 30 minutes. The solid content after polymerization and the polymerization conversion were obtained by the following formulae:

$$\text{Solid content after polymerization (\% by mass)}$$

$$= [(\text{mass after drying at 141 °C for 30 min.}) / (\text{mass of latex before drying})] \times 100$$

$$\text{Polymerization conversion (\%)}$$

$$= [(\text{amount of generated polymer} / \text{feed amount of all the monomers})] \times 100$$

The amount of generated polymer was obtained by subtracting the solids other than the polymer from the solids after polymerization. For the solids other than the polymer, the amount of components not volatilizing under the conditions at 141 °C was calculated from the feed amount of polymerization raw materials.

Measurement of incidence of aggregates:

After the polymerization, 2 pieces of medical gauze (12 warp threads and 12 woof threads per centimeter) were layered and set to perform filtration, the residue was dried at a temperature of 70 °C in the air for 15 hours, and thereafter the mass was measured to obtain a mass ratio of aggregates to the feed amount of the monomers.

Example 1:

A reactor having an internal volume of 5 L was used. Into the reactor, 2.0 kg (100 parts by mass) of 2-chloro-1,3-butadiene (chloroprene) (produced by Tokyo Chemical Industry, Co., Ltd.), 1.04 kg (52 parts by mass) of pure water, 40 g (2 parts by mass) of a rosin acid (R-300, produced by Arakawa Chemical Industries, Ltd.), a chain transfer agent: 2 g (0.1 parts by mass) of n-dodecyl mercaptan (produced by Tokyo Chemical Industry, Co., Ltd.), 100 g (5 parts by mass) of a 20 % by mass aqueous potassium hydroxide solution (guaranteed reagent, produced by Wako Junyaku K.K.), 12.8 g (0.64 parts by mass) of a sodium salt of a β-naphthalene sulfonate formaldehyde condensate (produced by Kao Corporation), and 6.7 g (0.05 parts by mass as sodium dodecylbenzenesulfonate) of a 15 % by mass aqueous solution of sodium dodecylbenzenesulfonate (Neopelex (registered trade name) G-15, produced by Kao Corporation) were fed and emulsified, and after the rosin acid was converted into a rosin acid soap, polymerization was performed in a nitrogen gas atmosphere at a temperature of 40 °C for 5 hours, using potassium persulfate (1st grade, produced by Wako Junyaku K.K.) as an initiator. When the polymerization conversion was confirmed to be 94 % or higher, the polymerization was terminated. Subsequently, unreacted monomers were eliminated via steam distillation to obtain a chloroprene polymer latex. The solid content after polymerization in the chloroprene polymer latex was 58.1 %. Aggregate generation was not observed.

Example 2:

A chloroprene polymer latex was produced under the same conditions as described in Example 1 except for using 9.8 g (0.49 parts by mass) of a sodium salt of a β-naphthalene sulfonate formaldehyde condensate and 6.0 g (0.045 parts by mass as sodium dodecylbenzenesulfonate) of a 15 % by mass aqueous solution of sodium dodecylbenzenesulfonate.

The polymerization conversion was 90 %, and the solid content after polymerization in the polymer latex was 56.6 %. Aggregate generation was not observed.

Comparative example 1:

A chloroprene polymer latex was produced under the same conditions as described in Example 1 except for adding no sodium dodecylbenzenesulfonate and adding 16 g (0.80 parts by mass) of a sodium salt of a β-naphthalene sulfonate formaldehyde condensate.

The polymerization conversion was 93 %, and the solid content after polymerization in the polymer latex was 56.1 %. The incidence of aggregates was 0.6 %.

Comparative example 2:

A chloroprene polymer latex was produced under the same conditions as described in Example 1 except for adding no sodium dodecylbenzenesulfonate and adding 12.8 g (0.64 parts by mass) of a sodium salt of a β-naphthalene sulfonate formaldehyde condensate.

The polymerization conversion was 93 %, the solid content after polymerization in the polymer latex was 56.9 %, and the incidence of aggregates was 0.1 %.

Results of Examples 1 and 2 and Comparative examples 1 and 2 are summarized in Table 1.

[Table 1]

|  | Example 1 | Example 2 | Comparative example 1 | Comparative example 2 |
|---|---|---|---|---|
| Chloroprene monomer[1] (parts by mass) | 100 | 100 | 100 | 100 |
| Rosin acid[2] (parts by mass) | 2 | 2 | 2 | 2 |
| Chain transfer agent[3] (parts by mass) | 0.1 | 0.1 | 0.1 | 0.1 |
| Sodium salt of a naphthalene sulfonate formaldehyde condensate[4] (parts by mass) | 0.64 | 0.49 | 0.80 | 0.64 |
| Sodium dodecylbenzenesulfonate[5] | 0.05 | 0.12 | - | - |
| Aggregate generation amount / monomer feed amount (mass ratio) | 0 | 0 | 0.6 | 0.1 |
| Polymerization conversion (%) | 94 | 90 | 93 | 93 |
| Solid content (%) | 58.1 | 56.6 | 56.1 | 56.9 |

1) Chloroprene (produced by Tokyo Chemical Industry, Co., Ltd.)
2) Rosin acid (R-300, produced by Arakawa Chemical Industries, Ltd.)
3) Chain transfer agent: n-dodecyl mercaptan (produced by Tokyo Chemical Industry, Co., Ltd.)
4) Sodium salt of a β-naphthalene sulfonate formaldehyde condensate (produced by Kao Corporation)
5) Sodium dodecylbenzenesulfonate (Neopelex (registered trade name) G-15, produced by Kao Corporation)

Aggregates were not generated in Examples 1 and 2 in which a sodium salt of a naphthalene sulfonate formaldehyde condensate and sodium dodecylbenzenesulfonate were added. In contrast, aggregates having adverse effects on productivity were generated in Comparative examples 1 and 2 in which sodium dodecylbenzenesulfonate was not used.

**Claims**

1. A method for producing a chloroprene polymer latex, comprising: adding (B) a sodium salt of a naphthalene sulfonate formaldehyde condensate and (C) sodium dodecylbenzenesulfonate to a monomer solution that contains (A-1) 2-chloro-1,3-butadiene (chloroprene) or a monomer solution that contains (A-1) 2-chloro-1,3-butadiene (chloroprene) and (A-2-1) 2,3-dichloro-1,3-butadiene, and performing emulsion polymerization.

2. The method for producing a chloroprene polymer latex according to Claim 1, wherein the addition amount of the sodium salt of a naphthalene sulfonate formaldehyde condensate is 0.3 parts by mass or higher and 2.0 parts by mass or lower relative to the feed amount of all the monomers of 100 parts by mass.

3. The method for producing a chloroprene polymer latex according to Claim 1 or 2, wherein the addition amount of sodium dodecylbenzenesulfonate is 0.01 parts by mass or higher and 0.2 parts by mass or lower relative to the feed amount of all the monomers of 100 parts by mass.

4. The method for producing a chloroprene polymer latex according to any one of Claims 1 to 3, wherein an anionic surfactant is used as an emulsifier.

5. The method for producing a chloroprene polymer latex according to any one of Claims 1 to 4, wherein a rosin acid soap that is a rosin acid saponified with an excess amount of sodium hydroxide and/or potassium hydroxide is used as an emulsifier.

6. The method for producing a chloroprene polymer latex according to any one of Claims 1 to 5, wherein the monomer solution further contains (A-2-2) another monomer that is copolymerizable with (A-1) 2-chloro-1,3-butadiene (chloroprene).

## INTERNATIONAL SEARCH REPORT

| International application No. |
| --- |
| PCT/JP2019/048316 |

**A. CLASSIFICATION OF SUBJECT MATTER**
Int. Cl. C08F36/18(2006.01)i, C08F2/26(2006.01)i
FI: C08F36/18, C08F2/26 A

According to International Patent Classification (IPC) or to both national classification and IPC

**B. FIELDS SEARCHED**

Minimum documentation searched (classification system followed by classification symbols)
Int. Cl. C08F36/18, C08F2/26

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2016/133191 A1 (DENKA COMPANY LIMITED) 25 August 2016, claims, paragraphs [0014]-[0017], [0029], [0055], [0070], [0077], [0083], examples 10, 18 | 1-6 |
| X | JP 2004-189917 A (DENKI KAGAKU KOGYO KABUSHIKI KAISHA) 08 July 2004, claims, paragraphs [0014], [0016], examples 2, 3 | 1-6 |
| A | WO 2018/008509 A1 (DENKA COMPANY LIMITED) 11 January 2018 | 1-6 |
| A | JP 2014-114342 A (DENKI KAGAKU KOGYO KABUSHIKI KAISHA) 26 June 2014 | 1-6 |

☒ Further documents are listed in the continuation of Box C.    ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05.02.2020 | 15.02.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/048316 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2011/065524 A1 (SHOWA DENKO KABUSHIKI KAISHA) 03 June 2011 | 1-6 |

Form PCT/ISA/210 (continuation of second sheet) (January 2015)

**INTERNATIONAL SEARCH REPORT**
Information on patent family members

| International application No. |
|---|
| PCT/JP2019/048316 |

| Patent Documents referred to in the Report | Publication Date | Patent Family | Publication Date |
|---|---|---|---|
| WO 2016/133191 A1 | 25.08.2016 | TW 201638269 A | |
| JP 2004-189917 A | 08.07.2004 | (Family: none) | |
| WO 2018/008509 A1 | 11.01.2018 | US 2019/0309195 A1 EP 3483211 A1 CN 109476877 A | |
| JP 2014-114342 A | 26.06.2014 | (Family: none) | |
| WO 2011/065524 A1 | 03.06.2011 | US 2012/0238678 A1 EP 2508560 A1 CN 102666708 A | |

Form PCT/ISA/210 (patent family annex) (January 2015)

**EP 3 904 403 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11502889 A
- US 5773544 A